# EUROPÄISCHE PATENTSCHRIFT

(11) **EP 2 456 316 B1**
(45) Veröffentlichungstag und Bekanntmachung des Hinweises auf die Patenterteilung: **19.12.2012**
(21) Anmeldenummer: 11720807.4
(22) Anmeldetag: 24.05.2011
(51) Int. Cl.: A22C 25/16

(54) **VORRICHTUNG UND VERFAHREN ZUM VOLLSTÄNDIGEN TRENNEN VON FILETS VOM GRÄTENGERÜST GEKÖPFTER UND ENTWEIDETER FISCHE UNTER DURCHSCHNEIDEN EINES VON ANDEREN WERKZEUGEN BELASSENEN STEGES**
APPARATUS AND METHOD FOR SEVERING FILLETS COMPLETELY FROM THE CARCASS OF BEHEADED AND EVISCERATED FISH, A CROSSPIECE LEFT BY OTHER TOOLS BEING CUT THROUGH IN THE PROCESS
DISPOSITIF ET PROCÉDÉ PERMETTANT DE DÉTACHER COMPLÈTEMENT DES FILETS DES ARÊTES DE POISSONS VIDÉS ET ÉTÊTÉS EN TRANCHANT UNE CHAIR LAISSÉE PAR D'AUTRES OUTILS

(30) Priorität: 31.05.2010 DE 102010022056
(43) Veröffentlichungstag der Anmeldung: 30.05.2012
(73) Patentinhaber: Nordischer Maschinenbau Rud. Baader GmbH + Co. KG, 23560 Lübeck (DE)
(72) Erfinder: JÜRS, Michael, 23683 Haffkrug (DE)
(74) Vertreter: Stork Bamberger
(86) Internationale Anmeldenummer: PCT/EP2011/058432
(87) Internationale Veröffentlichungsnummer: WO 2011/151221

(56) Entgegenhaltungen:
- DE-B- 1 239 827
- DE-B3-102007 053 904
- DE-B3-102007 053 905
- US-A- 3 570 048
- US-A- 4 748 723

## Beschreibung

Die Erfindung betrifft eine Vorrichtung zum vollständigen Trennen von Filets vom Grätengerüst geköpfter und entweideter Fische unter Durchschneiden eines von der Vorrichtung in Transportrichtung T vorgeschalteten Trennwerkzeugen belassenen Steges, umfassend ein Trennaggregat mit einem Kreismesserpaar zum Trennen des Steges sowie einen endlos umlaufenden Transportförderer mit mindestens einem sattelförmigen Stützkörper zum Aufnehmen der Fische und Fördern derselben in Transportrichtung T durch das Trennaggregat mit dem Schwanz voraus, wobei die Kreismesser an einem quer zur Transportebene E auf und ab bewegbaren Träger angeordnet sind.

Die Erfindung betrifft des Weitern ein Verfahren zum vollständigen Trennen von Filets vom Grätengerüst geköpfter und entweideter Fische unter Durchschneiden eines bei vorherigen Trennschnitten, insbesondere Bauchschnitten und Rückenschnitten belassenen Steges, umfassend die Schritte: Transportieren eines mit seiner Mittelgräte auf einem Stützkörper mit dem Rücken nach oben aufliegenden Fisches Schwanz voraus durch eine Vorrichtung zum Trennen der Filets vom Grätengerüst, wobei die Filets während des Transports mittels rotierender Kreismesser vom Grätengerüst getrennt werden.

Solche Vorrichtungen und Verfahren kommen in der Fisch verarbeitenden Industrie zum Einsatz, um Fische automatisch zu filetieren. Dabei werden die Fische üblicherweise mittels Transportförderern bzw. am Transportförderer angeordneten Stützkörpern, die auch als Transportsattel bezeichnet werden, zu den einzelnen Bearbeitungsstationen transportiert, u.a. auch zu der Vorrichtung zum vollständigen Trennen von Filets vom Grätengerüst geköpfter und entweideter Fische. Ein wesentlicher Arbeitsschritt ist das vollständige Trennen bzw. Lösen der Filets vom Grätengerüst, die bereits durch der Trennvorrichtung in Transportrichtung T vorgeschaltete Werkzeuge, wie z.B. Bauchmesser, Rückenmesser, Rippenschaber oder dergleichen üblicherweise weitestgehend vom Grätengerüst gelöst sind. Der letzte Arbeitsschritt beim Filetieren in einer Sattelfiletiermaschine beinhaltet nämlich die Aufgabe, die beiden u.a. durch die Bauchschnitte und Rückenschnitte weitestgehend vom Grätengerüst gelösten Filets, die noch um die Mittelgräte/Wirbelsäule herum über einen Steg mit dem Grätengerüst verbunden sind, beginnend vom Schwanzbereich, also von der Schwanzwurzel bis zum Beginn der Bauchhöhle zu trennen, so dass die Filets vollständig frei sind. Das Trennaggregat zum Durchführen der Trennschnitte ist üblicherweise zu beiden Seiten des zu bearbeitenden Fisches angeordnet, so dass die Filets parallel oder zeitversetzt von der Mittelgräte bzw. vom Grätengerüst getrennt werden können.

Aus der DE 10 2007 053 904 B3 ist eine Vorrichtung mit den Merkmalen des Oberbegriffes des Anspruches 1 bekannt. Die darin beschriebene Vorrichtung weist ein Trennaggregat mit zwei Kreismessern auf, die gleichgerichtet in Transportrichtung angetrieben sind. Das bedeutet, dass die Kreismesser in ihrem Richtungssinn beim Schneiden bzw. Trennen im Fisch in Transportrichtung T mitlaufen und den Fisch dabei ziehen bzw. beschleunigen. Die beiden koaxial zueinander angeordneten, also parallel zueinander verlaufenden Kreismesser tauchen durch die zur Transportrichtung T gleichgerichtete Drehrichtung der Kreismesser zum Schneiden bzw. Trennen in Gegenlagen ein, um einen sicheren Trennschnitt zu gewährleisten. Daraus resultiert eine Scherwirkung zwischen dem sich drehenden Kreismesser und der feststehenden, Gegenlage. Diese aus dem Stand der Technik bekannte Vorrichtung weist jedoch den Nachteil auf, dass die Fische durch die in Transportrichtung T mitlaufende Drehrichtung der Kreismesser vom Stützkörper gezogen werden können, was zu Fehlschnitten führt. Im Übrigen ist auch eine erhöhte Störanfälligkeit gegeben, da die Filets unter Umständen zwischen die Kreismesser gezogen werden. Die parallele Anordnung der Kreismesser zueinander führt des Weiteren dazu, dass die Mittelgräte zwischen den Kreismessern eingeklemmt und dann unkontrolliert nach oben gerissen werden kann.

Weiterhin sind die Hygieneanforderungen bei der bekannten Anordnung von Kreismesser und Gegenlage nur mit erheblichem Aufwand zu erfüllen, da das Reinigen der Bereiche zwischen Kreismesser und Gegenlage aufwendig ist.

Der Erfindung liegt damit die Aufgabe zugrunde, eine einfache und zuverlässige Vorrichtung zu schaffen, die ein verbessertes und zuverlässigeres Trennen der Filets vom Grätengerüst gewährleistet. Des Weiteren besteht die Aufgabe darin, ein entsprechendes Verfahren vorzuschlagen.

Die Aufgabe wird zum einen durch eine Vorrichtung gemäß Anspruch 1 dadurch gelöst, dass die beiden Kreismesser des Trennaggregates gleichgerichtet entgegen der Transportrichtung T angetrieben sind. Mit dem gleichgerichteten Antrieb entgegen der Transportrichtung T ist der Richtungssinn beim Auftreffen der Kreismesser auf den Fisch beschrieben. Durch den gegenläufigen Richtungssinn, der auf die Position bzw. den Moment bezogen ist, in der bzw. in dem die Kreismesser zum Schneiden auf den Fisch treffen, wird der Fisch entgegen der Transportrichtung T gedrückt bzw. verzögert, so dass der Fisch in seiner stabilen Position auf dem Stützkörper bleibt. Durch die erfindungsgemäße Ausbildung, nämlich den entgegen der Transportrichtung T gerichteten Richtungssinn der Kreismesser, wird eine zuverlässige Schnittführung der Kreismesser erreicht, die mit geringem Aufwand insbesondere auch an bestehenden Vorrichtungen eingesetzt werden kann. Durch die Umkehr der Drehrichtung der Kreismesser kann auf die bisherige Ausbildung der Gegenlagen verzichtet werden, so dass die erfindungsgemäße Vorrichtung gegenüber den bekannten Vorrichtungen einfacher zu reinigen ist.

Eine bevorzugte Ausführungsform der Erfindung zeichnet sich dadurch aus, dass die beiden Kreismesser in einem Winkel α zueinander angeordnet sind, derart, dass sich der Abstand der Kreismesser entgegen der Transportrichtung T vergrößert. Mit dieser Ausbildung ergibt sich zwischen den Kreismessern bzw. deren Schneiden und der Mittelgräte bzw. dem Grätengerüst ein abweisender Winkel, so dass die Gefahr des Einschneides der Kreismesser in die Mittelgräte bzw. in das Grätengerüst und damit Grätenreste im Filet minimiert wird.

Eine zweckmäßige Weiterbildung der Erfindung ist dadurch gekennzeichnet, dass die beiden Kreismesser in einem Winkel β zueinander angeordnet sind, derart, dass sich der Abstand der Kreismesser ausgehend von der Transportebene E nach oben hin vergrößert. Durch die V-förmige Stellung der Kreismesser, deren Abstand mit zunehmender Entfernung von der Transportebene E vergrößert, wird ein Freiraum geschaffen, der eine Klemmung der Mittelgräte bzw. des Grätengerüsts zwischen den Kreismessern verhindert.

Vorteilhafterweise ist jedem Kreismesser ein eng an der Außenseite der Kreismesser anliegendes Schabeelement zugeordnet, wobei die Schabeelemente an dem jeweiligen Schwenkhebel angeordnet sind. Durch die zusätzlichen Schabeelemente, die neben einer Leitfunktion für die gelösten Filets seitlich von den Kreismessern weg insbesondere auch eine Trennfunktion zum Lösen von Bereichen, die von vorhergehenden Werkzeugen, insbesondere den Kreismessern, nicht getrennt wurden, aufweisen, wird die Schnittqualität verbessert und die Ausbeute erhöht.

Die Aufgabe wird zum anderen durch ein Verfahren gemäß Anspruch 9 dadurch gelöst, dass die Kreismesser beim Trennen gleichgerichtet entgegen der Transportrichtung T drehen. Die sich daraus ergebenden Vorteile wurden bereits im Zusammenhang mit der Vorrichtung erläutert, so dass zur Vermeidung von Wiederholungen auf die entsprechenden Passagen verwiesen wird.

Weitere zweckmäßige und/oder vorteilhafte Merkmale und Weiterbildungen der Erfindung ergeben sich aus den Unteransprüchen und der Beschreibung. Eine besonders bevorzugte Ausführungsform der Erfindung sowie das erfindungsgemäße Verfahrensprinzip werden anhand der beigefügten Zeichnung näher erläutert. In der Zeichnung zeigt:

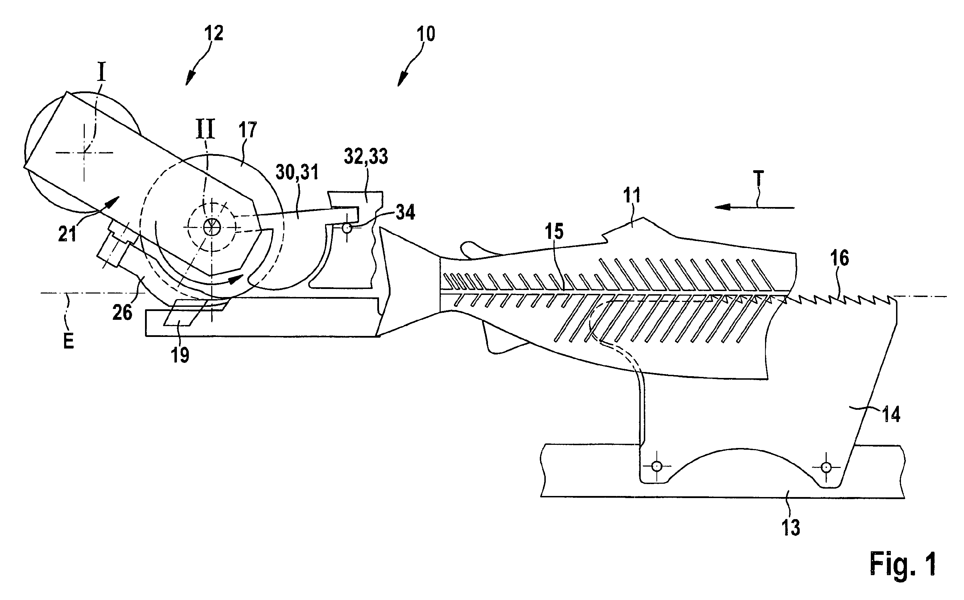

- Fig. 1: eine schematische Darstellung der erfindungsgemäßen Vorrichtung in Seitenansicht,

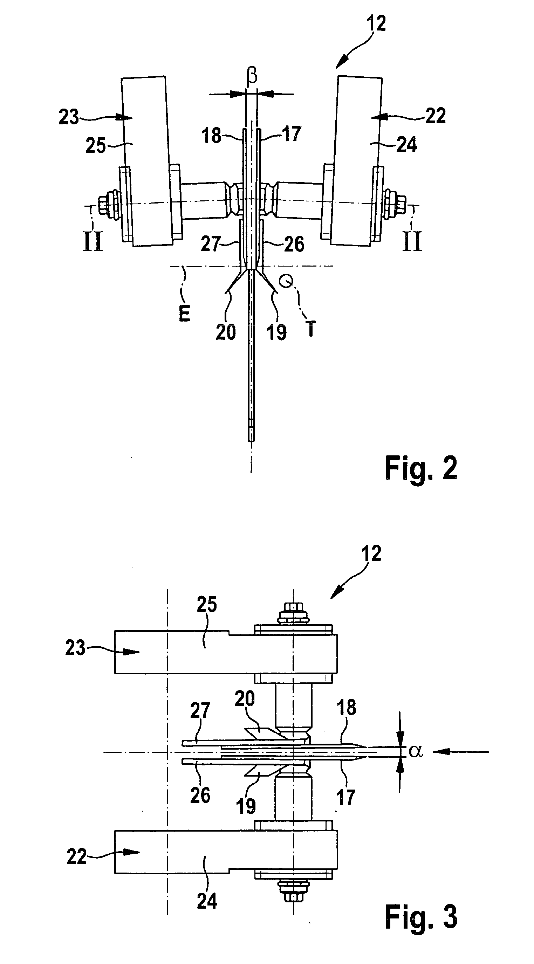

- Fig. 2: eine Vorderansicht der Vorrichtung gemäß Figur 1,
- Fig. 3: eine Draufsicht auf das Trennaggregat der Vorrichtung gemäß Figur 1, und

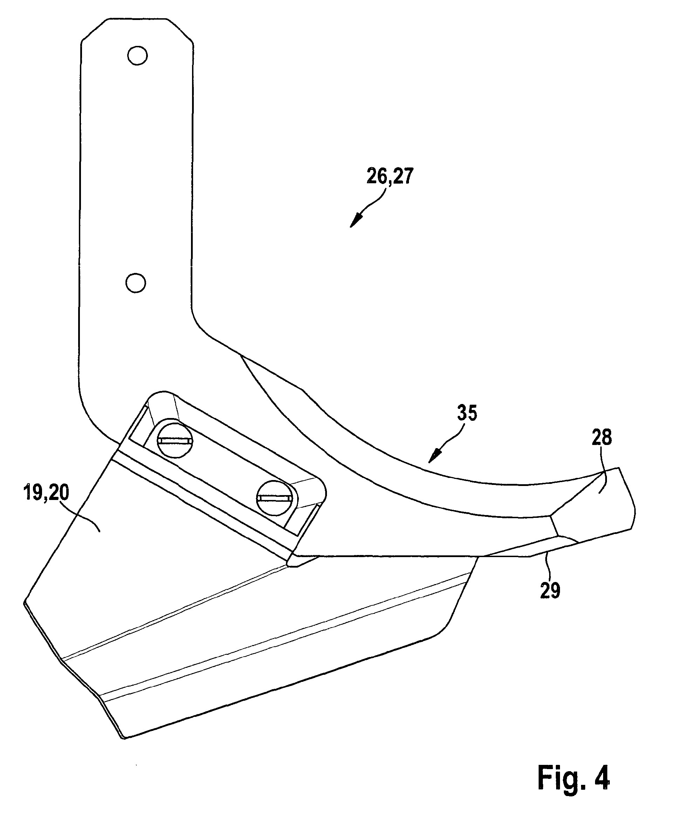

- Fig. 4: eine Seitenansicht der jedem Kreismesser zugeordneten Schabeelemente.

Die in der Zeichnung dargestellte Vorrichtung dient zum vollständigen Trennen der bereits durch Bauchschnitte, Rückenschnitte und andere Trennschritte, nämlich z.B. durch Schaben, Kratzen, Schneiden oder dergleichen teilweise gelösten Filets vom Grätengerüst eines Fisches beginnend von der Schwanzwurzel eines Fisches bis zum Beginn der Bauchhöhle.

Die Vorrichtung 10 zum vollständigen Trennen von Filets vom Grätengerüst geköpfter und entweideter Fische 11 unter Durchschneiden eines von (nicht dargestellten) Bauch - und Rückerunessern sowie möglicherweise weiteren Trennwerkzeugen belassenen Steges um die Mittelgräte 15 des Fisches 11 herum umfasst ein Trennaggregat 12 sowie einen endlos umlaufenden Transportförderer 13 mit mindestens einem Stützkörper 14. Der Fisch 11 liegt mit seiner Mittelgräte 15 auf einer Stützkante 16 des Stützkörpers 14. Der Fisch 11 wird Schwanz voraus mit dem Rücken nach oben in Transportrichtung T durch die Vorrichtung 10 gefördert. Dabei definiert der Fisch 11 bzw. dessen Mittelgräte 15 bzw. genauer die Stützkante 16 des Stützkörpers 14 die Transportebene E. Der endlos umlaufende Transportförderer 13 umfasst vorzugsweise mehrere Stützkörper 14. Diese sattelförmigen Stützkörper 14, die auch als Transportsattel bezeichnet werden, sind fest aber lösbar am Transportförderer 13 angeordnet und laufen mit diesem um. Die Stützkörper 14 sind zum Aufnehmen der Fische 11 ausgebildet und eingerichtet. Mittels des Stützkörpers 14 sind die auf ihm liegenden Fische 11 mit dem Schwanz voraus in Transportrichtung T durch das Trennaggregat 12 förderbar.

Das Trennaggregat 12 weist ein Kreismesserpaar 17, 18 auf, das zum Trennen des um die Mittelgräte 15 herum sich von der Schwanzflosse bzw. Schwanzwurzel bis zum Anfang der Bauchhöhe befindlichen und durch die in Transportrichtung T stromaufwärts angeordneten Trenn- bzw. Schneidwerkzeuge stehen gelassenen Steges ausgebildet und eingerichtet ist. Die das Kreismesserpaar bildenden Kreismesser 17, 18 sind oberhalb der Transportebene E, also oberhalb des Transportförderers 13, zum Eingriff in den Fisch 11 angeordnet und rotierend um eine Achse II angetrieben. Die Kreismesser 17, 18 sind an einem Träger 21 angeordnet. Mittels des Trägers 21 ist das Trennaggregat 12 quer, also mit mindestens einer vertikalen Komponente, zur Transportebene E auf und ab bewegbar. Diese Bewegbarkeit kann zum Ausgleich von Höhendifferenzen aber auch zum Bewegen des Trennaggregats 12 aus einer Warteposition in eine Arbeitsposition und umgekehrt dienen. Die Bewegung kann linear, kreisbogenförmig oder anderweitig in üblicher Weise ausgeführt werden. Bevorzugt ist eine Schwenkbewegung des Trägers 21 um eine Achse I. Beim eigentlichen Trenn- bzw. Lösevorgang durch die beiden Kreismesser 17, 18 des Trennaggregates 12 sind beide Kreismesser 17, 18 gleichgerichtet entgegen der Transportrichtung T um die Achse II angetrieben. Anders ausgedrückt ist der Richtungssinn beider Kreismesser 17, 18 beim Eintritt in den Fisch 11 bzw. an der dem Transportförderer 13 nahe stehenden Seite der Kreismesser 17, 18 entgegen der Transportrichtung T gerichtet.

Die beiden Kreismesser 17, 18 können parallel beabstandet zueinander angeordnet sein. Bevorzugt ist jedoch eine Anordnung der Kreismesser 17, 18 in einem Winkel α zueinander, derart, dass sich der Abstand der Kreismesser 17, 18 entgegen der Transportrichtung T vergrößert. Anders ausgedrückt reduziert sich der Abstand der Kreismesser 17, 18 in Transportrichtung T, so dass einerseits das Einfädeln der Mittelgräte 15 zwischen die Kreismesser 17, 18 erleichtert ist und andererseits mit fortschreitendem Transportweg eine Annäherung der Kreismesser 17, 18 an die Mittelgräte 15 erreicht wird. Alternativ oder überlagert können die beiden Kreismesser 17, 18 auch in einem Winkel β zueinander angeordnet sein, derart, dass sich der Abstand der Kreismesser 17, 18 ausgehend von der Transportebene E nach oben hin vergrößert, so dass ein V-förmiger Kanal gebildet ist, der die Mittelgräte 15 einerseits führt und anderseits eine Klemmung der Mittelgräte 15 verhindert.

Wie in der Zeichnung zu erkennen, ist es bevorzugt, dass das Trennaggregat 12 zwei Teilaggregate 22, 23 umfasst. Jedes Teilaggregat 22, 23 weist neben einem Kreismesser 17 bzw. 18 optional auch eine Messerabdeckung 30 bzw. 31 auf und umfasst jeweils einen Schwenkhebel 24, 25, an dem die Kreismesser 17, 18 und die Messerabdeckungen 30, 31 angeordnet sind. Die Schwenkhebel 24, 25 sind um die Achse I rotierend bewegbar bzw. schwenkbar. Die beiden Teilaggregate 22, 23 können auch zu einem gemeinsamen einteiligen Trennaggregat 12 miteinander verbunden sein. Die Teilaggregate 22, 23 bzw. genauer die Schwenkhebel 24, 25 sind optional in bekannter Weise auch zur Einstellung und Veränderung des Spaltes bzw. Abstands zwischen den Kreismessern 17, 18 ausgebildet und eingerichtet. Vorzugsweise sind die beiden Kreismesser 17, 18 mit der gleichen Geschwindigkeit angetrieben. Es besteht jedoch die Möglichkeit, die Antriebsgeschwindigkeiten der beiden Kreismesser 17, 18 zu variieren, und zwar auch unterschiedlich zueinander. Optional sind die Teilaggregate 22, 23 auch in der Höhe verstellbar ausgebildet.

Die Messerabdeckungen 30, 31 sind ebenso wie die Kreismesser 17, 18 um die Achse II bewegbar, und zwar unabhängig von der Rotation der Kreismesser 17, 18 schwenkbar. Die Messerabdeckungen 30, 31 sind vorzugsweise mit oberen Grätenführungen 32, 33 in Wirkverbindung, derart, das eine Ausweichbewegung der Grätenführungen 32, 33 über einen Bolzen 34 oder dergleichen auf die Messerabdeckungen 30, 31 übertragbar ist. Anders ausgedrückt wird die Schwenkbewegung der Messerabdeckungen 30, 31 durch die oberen Grätenführungen 32, 33 gesteuert. Neben der Abdeckfunktion der Messerabdeckungen 30, 31 sowie deren Führungsfunktion der Schwanzflosse zwischen die Kreismesser 17, 18 können die Messerabdeckungen 30, 31 auch als Niederhalter für den zu bearbeitenden Fisch 11 dienen. Der zu bearbeitenden Fisch 11 kann durch den entgegen der Transportrichtung T gerichteten Richtungssinn der Kreismesser 17, 18 das Bestreben haben, nach oben weg vom Stützkörper 14 gedrückt zu werden. Die Messerabdeckungen 30, 31 verhindern auf einfache Weise und ohne zusätzliche Elemente vorzugsweise allein durch ihr Eigengewicht das Anheben des Fisches 11 und stabilisieren somit die Position des Fisches 11 auf dem Stützkörper 14.

In einer weiteren optionalen Ausführung kann jedem Kreismesser 17, 18 ein Schabeelement 26, 27 zugeordnet sein. Die Schabeelemente 26, 27 liegen vorzugsweise eng an der Außenseite der Kreismesser 17, 18 an oder stehen in einem geringen Abstand zur Außenseite bzw. Oberfläche der Kreismesser 17, 18. Die Schabeelemente 26, 27 sind vorzugsweise ebenfalls an den entsprechenden Schwenkhebeln 24, 25, vorzugsweise lösbar, angeordnet, so dass sich die relative Position der Schabeelemente 26, 27 gegenüber den Kreismessern 17, 18 bei einer Schwenkbewegung der Schwenkhebel 24, 25 um die Achse I nicht verändert. Selbstverständlich ist jedoch die Position der Schabeelemente 26, 27 zu den Kreismessern 17, 18 einstellbar. Den Schabeelementen 26, 27 kann jeweils ein Abweiserelement 19, 20 zugeordnet sein. Die Abweiserelemente 19, 20 ragen quer zur Transportrichtung T über die Kreismesser 17, 18 und die Schabeelemente 26, 27 hinaus. An der dem zu bearbeitenden Fisch 11 zugewandten Seite weisen die Schabeelemente 26, 27 eine abgeflachte bzw. abgestumpfte und in Transportrichtung T schräg nach außen laufende Spitze 28 auf, mittels der der Schwanzabschnitt der bereits gelösten Filets seitlich vom Kreismesser 17 bzw. 18 weg geleitet wird. Die Unterseite 29 des näherungsweise sichelförmigen Abschnitts 35 der Schabeelemente 26, 27, dessen Krümmung etwa der Kreisbogenform der Kreismesser 17, 18 entspricht, ist ausgebildet und eingerichtet, um eventuell nicht durch die Kreismesser 17, 18 getrennte Bereiche zu schneiden. Dazu ist an der Unterseite 29 eine Trennkante ausgebildet.

Im Folgenden wird das Verfahrensprinzip anhand der Figuren näher beschrieben: Der auf dem Stützkörper 14 befindliche Fisch 11, der bereits den Bauchschnitten und Rückenschnitten oder möglicherweise weiteren Trennschritten unterzogen wurde, wird in Transportrichtung T Schwanz voraus in Richtung der Vorrichtung 10 bzw. des Trennaggregats 12 transportiert. Der Fisch 11 wird durch die unteren (nicht dargestellten) Grätenführungen und die oberen Grätenführungen 32, 33 geführt zwischen die Messerabdeckungen 30, 31 geleitet. Durch die Form und/oder Anordnung der Messerabdeckungen 30, 31 zueinander wird der Fisch 11 zuverlässig zwischen die Kreismesser 17, 18 geführt. Das Einlaufen der Fische 11 zwischen die Kreismesser 17, 18 kann durch die weiter oben genannte Winkelstellung der Kreismesser 17, 18 und/oder das voneinander weg und aufeinander zu Schwenken der Teilaggregate 22, 23 noch weiter unterstützt bzw. vereinfacht werden. Das Einlaufen des Fisches 11 zwischen die Kreismesser 17, 18 und/oder dessen Größe kann optional mittels nicht dargestellter Detektionsmittel festgestellt werden. Wenn sich die Schwanzflosse zwischen den Kreismessern 17, 18 befindet, werden die Kreismesser 17, 18 auf den tatsächlichen Schnittabstand eingestellt. Bevor der Fisch 11 die Kreismesser 17, 18 erreicht, werden diese in ihre Arbeitsposition bewegt bzw. geschwenkt. Für den Fall, dass solche Detektionsmittel nicht vorgesehen sind, werden die Kreismesser 17, 18 vor dem Einlaufen der zu bearbeitenden Fische 11 voreingestellt in ihre Arbeits- bzw. Schnittposition gebracht.

Beim kontinuierlichen Transport der Fische 11 durch das Trennaggregat 12 werden die von den Bauchmessern und Rückenmessern oder anderen Werkzeugen um die Mittelgräte 15 bzw. Wirbelsäule herum stehen gelassenen Stege von der Schwanzflosse bis zum Anfang der Bauchhöhle durch die Kreismesser 17, 18 vollständig getrennt, indem die beiden Kreismesser 17, 18 beim Trennen gleichgerichtet entgegen der Transportrichtung T drehen. Beim Einschneiden in den Fisch 11 wirken die Kreismesser 17, 18 dabei durch den gewählten Richtungssinn verzögernd auf den Fisch 11 bzw. veranlassen diesen zu einer Aufwärtsbewegung, die durch die Messerabdeckungen 30, 31 als Niederhalter verhindert wird. Sollten die Filets durch die Kreismesser 17, 18 nicht vollständig vom Grätengerüst gelöst werden, können die Schabeelemente 26, 27 die nicht von den vorangegangenen Werkzeugen frei geschnittenen Bereiche im Filetfleisch vollständig trennen. Die vom Grätengerüst vollständig gelösten Filets werden dann durch die Schabeelemente 26, 27 und/oder die daran angeordneten Leitelemente 19, 20 von den Kreismessern 17, 18 seitlich abgewiesen. In Abhängigkeit der Größe der zu bearbeitenden Fische 11 können die Kreismesser 17, 18 oder die Teilaggregate 22, 23 insgesamt in der Breite zur Veränderung des Abstandes der Kreismesser 17, 18 und/oder in der Höhe verstellt werden.

## Patentansprüche

1. Vorrichtung (10) zum vollständigen Trennen von Filets vom Grätengerüst geköpfter und entweideter Fische (11) unter Durchschneiden eines von der Vorrichtung (10) in Transportrichtung T vorgeschalteten Trennwerkzeugen belassenen Steges, umfassend ein Trennaggregat (12) mit einem Kreismesserpaar (17, 18) zum Trennen des Steges sowie einen endlos umlaufenden Transportförderer (13) mit mindestens einem sattelförmigen Stützkörper (14) zum Aufnehmen der Fische (11) und Fördern derselben in Transportrichtung T durch das Trennaggregat (12) mit dem Schwanz voraus, wobei die Kreismesser (17, 18) an einem quer zur Transportebene E auf und ab bewegbaren Träger (21) angeordnet sind, **dadurch gekennzeichnet, dass** die beiden Kreismesser (17, 18) des Trennaggregates (12) gleichgerichtet entgegen der Transportrichtung T angetrieben sind.

2. Vorrichtung nach Anspruch 1, **dadurch gekennzeichnet, dass** die beiden Kreismesser (17, 18) in einem Winkel α zueinander angeordnet sind, derart, dass sich der Abstand der Kreismesser (17, 18) entgegen der Transportrichtung T vergrößert.

3. Vorrichtung nach Anspruch 1 oder 2, **dadurch gekennzeichnet, dass** die beiden Kreismesser (17, 18) in einem Winkel β zueinander angeordnet sind, derart, dass sich der Abstand der Kreismesser (17, 18) ausgehend von der Transportebene E nach oben hin vergrößert.

4. Vorrichtung nach einem der Ansprüche 1 bis 3, **dadurch gekennzeichnet, dass** das Trennaggregat (12) zwei Teilaggregate (22, 23) umfasst, wobei jedes Teilaggregat (22, 23) ein Kreismesser (17, 18) sowie eine Messerabdeckung (30, 31) aufweist und das Kreismesser (17 bzw. 18) und die Messerabdeckung (30 bzw. 31) an einem Schwenkhebel (24, 25) zum Schwenken um eine Achse I angeordnet sind.

5. Vorrichtung nach Anspruch 4, **dadurch gekennzeichnet, dass** die Kreismesser (17, 18) und die Messerabdeckungen (30, 31) um eine Achse II drehbar bzw. schwenkbar sind, wobei die Kreismesser (17, 18) unabhängig von den Messerabdeckungen (30, 31) bewegbar ausgebildet und angeordnet sind.

6. Vorrichtung nach Anspruch 4 oder 5, **dadurch gekennzeichnet, dass** die Teilaggregate (22, 23) zur Veränderung der Abstände der Kreismesser (17, 18) ausgebildet und eingerichtet sind.

7. Vorrichtung nach einem der Ansprüche 4 bis 6, **dadurch gekennzeichnet, dass** jedem Kreismesser (17, 18) ein eng an der Außenseite der Kreismesser (17, 18) anliegendes Schabeelement (26, 27) zugeordnet ist, wobei die Schabeelemente (26, 27) an dem jeweiligen Schwenkhebel (24, 25) angeordnet sind.

8. Vorrichtung nach Anspruch 7, **dadurch gekennzeichnet, dass** den Schabeelementen (26, 27) jeweils ein Abweiserelement (19, 20) zugeordnet ist.

9. Verfahren zum vollständigen Trennen von Filets vom Grätengerüst geköpfter und entweideter Fische unter Durchschneiden eines bei vorherigen Trennschnitten, insbesondere Bauchschnitten und Rückenschnitten belassenen Steges, umfassend die Schritte:
- Transportieren eines mit seiner Mittelgräte (15) auf einem Stützkörper (14) mit dem Rücken nach oben aufliegenden Fisches (11) Schwanz voraus durch eine Vorrichtung (10) zum Trennen der Filets vom Grätengerüst, wobei
- die Filets während des Transports mittels rotierender Kreismesser (17, 18) vom Grätengerüst getrennt werden,
**dadurch gekennzeichnet, dass** die Kreismesser (17, 18) beim Trennen gleichgerichtet entgegen der Transportrichtung T drehen.

10. Verfahren nach Anspruch 9, **dadurch gekennzeichnet, dass** die Filets durch schräg gestellte Kreismesser (17, 18) von diesen seitlich abgeleitet werden.

11. Verfahren nach Anspruch 9 oder 10, **dadurch gekennzeichnet, dass** von außen eng an den Kreismessern (17, 18) anliegende Schabeelemente (26, 27) das Trennen der Filets aktiv unterstützen und gleichzeitig die vollständig gelösten Filets seitlich von den Kreismessern (17, 18) abweisen.

## Claims

1. Apparatus (10) for completely separating fillets from the skeleton of decapitated and gutted fish (11), cutting through a web left by separating tools mounted in front of the apparatus (10) in the direction of transport T, comprising a separating unit (12) with a pair of circular blades (17, 18) for separating the web, and an endlessly rotating transport conveyor (13) with at least one saddle-shaped supporting body (14) for receiving the fish (11) and conveying them in the direction of transport T through the separating unit (12) tail first, wherein the circular blades (17, 18) are mounted on a carrier (21) which is movable up and down transversely to the plane of transport E, **characterised in that** the two circular blades (17, 18) of the separating unit (12) are driven in the same direction opposite the direction of transport T.

2. Apparatus according to claim 1, **characterised in that** the two circular blades (17, 18) are arranged at an angle α to each other, such that the distance between the circular blades (17, 18) increases in the direction opposite the direction of transport T.

3. Apparatus according to claim 1 or 2, **characterised in that** the two circular blades (17, 18) are arranged at an angle β to each other, such that the distance between the circular blades (17, 18) increases upwardly, starting from the plane of transport E.

4. Apparatus according to any one of claims 1 to 3, **characterised in that** the separating unit (12) comprises two partial units (22, 23), wherein each partial unit (22, 23) has a circular blade (17, 18) and a blade cover (30, 31), and the circular blade (17 or 18) and the blade cover (30 or 31) are mounted on a pivot lever (24, 25) for pivoting about an axis I.

5. Apparatus according to claim 4, **characterised in that** the circular blades (17, 18) and the blade covers (30, 31) are rotatable or pivotable about an axis II, wherein the circular blades (17, 18) are constructed and arranged to be movable independently of the blade covers (30, 31).

6. Apparatus according to claim 4 or 5, **characterised in that** the partial units (22, 23) are constructed and designed to vary the distances between the circular blades (17, 18).

7. Apparatus according to any one of claims 4 to 6, **characterised in that** each circular blade (17, 18) is assigned a scraping element (26, 27) which abuts closely against the outside of the circular blades (17, 18), wherein the scraping elements (26, 27) are arranged on the respective pivot lever (24, 25).

8. Apparatus according to claim 7, **characterised in that** the scraping elements (26, 27) are each assigned a deflector element (19, 20).

9. Method for completely separating fillets from the skeleton of decapitated and gutted fish, cutting through a web left during previous separating cuts, in particular ventral cuts and dorsal cuts, comprising the steps of:
- transporting a fish (11) resting with its backbone (15) on a supporting body (14) with its back at the top, tail first through an apparatus (10) for separating the fillets from the skeleton, wherein
- the fillets are separated from the skeleton during transport by means of rotating circular blades (17, 18),
**characterised in that** the circular blades (17, 18) rotate in the same direction opposite the direction of transport T during separation.

10. Method according to claim 9, **characterised in that** the fillets are guided laterally away from tilted circular blades (17, 18) by the latter.

11. Method according to claim 9 or 10, **characterised in that** scraping elements (26, 27) abutting closely against the circular blades (17, 18) from the outside actively assist separation of the fillets and at the same time deflect the fully detached fillets laterally from the circular blades (17, 18).

## Revendications

1. Dispositif (10) permettant de détacher complètement des filets des arêtes de poissons (11) vidés et étêtés en tranchant une chair laissée par le dispositif d'outils de découpe disposés en amont dans le sens du transport T, comprenant un élément de découpe (12) avec une paire de lames rotatives (17, 18) permettant de détacher la chair, ainsi qu'un convoyeur de transport (13) constamment en rotation avec au moins un corps de soutien en forme d'étrier (14) pour recevoir les poissons (11) et les faire passer la queue la première dans le sens du transport T à travers l'élément de découpe (12), les lames rotatives (17, 18) étant disposées sur un support (21) mobile de haut en bas en travers du plan de transport E, **caractérisé en ce que** les deux lames rotatives (17, 18) de l'élément de découpe (12) sont entraînées dans le sens inverse du transport T.

2. Dispositif selon la revendication 1, **caractérisé en ce que** les deux lames rotatives (17, 18) sont disposées l'une par rapport à l'autre selon un angle α, de façon à ce que l'écart des lames rotatives (17, 18) s'agrandisse dans le sens inverse du transport T.

3. Disposition selon la revendication 1 ou 2, **caractérisé en ce que** les deux lames rotatives (17, 18) sont disposées l'une par rapport à l'autre selon un angle β, de façon à ce que l'écart des lames rotatives (17, 18) s'agrandisse en allant du plan de transport E vers le haut.

4. Dispositif selon l'une des revendications 1 à 3, **caractérisé en ce que** l'élément de découpe (12) comprend deux sous-éléments (22, 23), chaque sous-élément (22, 23) présentant une lame rotative (17, 18), ainsi qu'une couverture de lame (30, 31), et la lame rotative (17 ou 18) et la couverture de lame (30 ou 31) étant associées à un levier pivotant (24, 25) pour tourner autour d'un axe I.

5. Dispositif selon la revendication 4, **caractérisé en ce que** les lames rotatives (17, 18) et les couvertures de lames (30, 31) peuvent pivoter ou être orientées autour d'un axe II, les lames rotatives (17, 18) étant formées et disposées pour être mobiles, indépendamment des couvertures de lames (30, 31).

6. Dispositif selon la revendication 4 ou 5, **caractérisé en ce que** les sous-éléments (22, 23) sont formés et installés pour modifier les écarts des lames rotatives (17, 18).

7. Dispositif selon l'une des revendications 4 à 6, **caractérisé en ce que** chaque lame rotative (17, 18) est associée à un élément de grattage (26, 27) attenant à la face extérieure des lames rotatives (17, 18), les éléments de grattage (26, 27) étant disposés sur le levier pivotant (24, 25) correspondant.

8. Dispositif selon la revendication 7, **caractérisé en ce que** les éléments de grattage (26, 27) sont chacun associés à un élément déflecteur (19, 20).

9. Procédé permettant de détacher complètement des filets des arêtes de poissons vidés et étêtés en tranchant une chair laissée lors de découpes de séparation préalables, en particulier des découpes ventrales et dorsales, comprenant les étapes suivantes :
• le transport, à travers un dispositif (10) permettant de détacher les filets des arêtes, d'un poisson (11) posé le dos vers le haut et la queue la première, avec son arête centrale (15) sur un corps de soutien (14),
• la séparation, pendant le transport, des filets et des arêtes au moyen de lames rotatives (17, 18),
**caractérisé en ce que**, lors de la séparation, les lames rotatives (17, 18) tournent dans le sens inverse du transport T.

10. Procédé selon la revendication 9, **caractérisé en ce que** les filets sont évacués sur les côtés des lames rotatives (17, 18) grâce à l'inclinaison de celles-ci.

11. Procédé selon la revendication 9 ou 10, **caractérisé en ce que** les éléments de grattage (26, 27) attenants aux lames rotatives (17, 18) par l'extérieur favorisent activement la séparation des filets et évacuent en même temps les filets complètement détachés sur les côtés des lames rotatives (17, 18).
